# EUROPEAN PATENT SPECIFICATION

(11) **EP 1 683 042 B1**
(45) Date of publication and mention of the grant of the patent: **14.04.2010**
(21) Application number: 04742215.9
(22) Date of filing: 09.08.2004
(51) Int. Cl.: G06F 17/30, H04L 12/18

(54) **METHOD FOR REMOTE CONTROLLING OF WWW-BROWSER**
VERFAHREN ZUR FERNSTEUERUNG EINES WWW-BROWSERS
PROCEDE DE COMMANDE A DISTANCE D'UN NAVIGATEUR WEB

(30) Priority: 22.09.2003 FI 20031358
(43) Date of publication of application: 26.07.2006
(73) Proprietor: XORTEC OY, 33720 Tampere (FI)
(72) Inventor: KOSKENSILTA, Aatu, FI-33200 Tampere (FI)
(74) Representative: Borchert, Uwe Rudolf
(86) International application number: PCT/FI2004/000472
(87) International publication number: WO 2005/029357

(56) References cited:
- EP-A2- 1 022 664
- EP-A2- 1 030 504
- WO-A1-01/05093
- US-A- 5 944 791
- US-A- 6 151 622
- US-A1- 2002 138 624

## Description

The invention relates to a method for remote controlling a www-browser, whereby a user is operating with an HTTP-server at his/her disposal by using his/her own www-browser for browsing various sources accessible over the internet, intranet or a similar communications network for documents of his/her choice, such that one or more clients in communication with the server have their browsers updated to display each document chosen by the user with his/her browser to be displayed.

International patent publication WO 01/05093 discloses a method, whereby the user is capable of directing the www-browsers of selected listeners to display documents from various sources accessible by his/her www-browser e. g. over the internet or intranet. The discussed method covers e. g. applications, in which the controller is in advance able to prepare lists of URL-addresses (Universal Resource Location) specifying the way and route of retrieving documents to be displayed.

However, the above-cited publication does not describe exactly how the administrator chooses the URL-address intended to be displayed by a client's browser. One convenient way of doing this would be to allow the user to browse through www-pages in a normal fashion, such that the client's browser would be updated to always show the same page as the user's browser.

However, due to the security architecture of browsers, this cannot be achieved in traditional methods by just using a www-browser and scripting languages in a normal manner. By means of the above-cited method, a function as mentioned above is nevertheless feasible with certain limitations, without installing extensions to the user's or client's browser, not to mention the use of Java or other such external programming language. The method is based only on the normal operation of a www-browser and on the characteristic capability of an HTTP-server to create dynamic pages in such a way that hypertext documents, especially those to be displayed in the controller's browser, will be processed in a server at his/her disposal, such that the following hypertext links present therein results in a request for the server to modify a document designated by a particular Hypertext link and then to return it to the user's browser for browsing and displaying, and then further to supply clients' browsers with a command to retrieve the document either from its original source, if that is accessible by the clients' browsers, or from a database (or a similar storage system) in the user's server, which is used for storing documents not accessible by the clients' browsers.

Other methods enabling a user to reflect his/her www-browsing to clients, such as e. g. services marketed under titles "Netmeeting" or "WebEx", are based on the fact that, by means of separate software, it is possible to demonstrate the process of any application program for the participants of a presentation or a conference, such that they will be able to either monitor the user's activities or to operate the functions of applications assigned to them in accordance with the discussed methods. These methods require specific operating systems and software in order to function, as well as often also special network configuration, nor is the operation thereof possible solely by means of a www-browser and an http-server.

In US 6 052 730 A, a method for transparently monitoring and/or modifying web browsing activities over an entire computer network is shown which does not require modification of client software and can be implemented on a single server. By rerouting HTTP requests through a centralized gateway server, the sequence and timing of URLs accessed by individual clients are recorded, providing the full information required to recreate a user session. The client HTTP requests are rerouted through the gateway server by modifying URLs within HTML documents. For each document sent to the client, any original URL which points to another server is modified so that it points to a CGI script program on the gateway. The gateway server then fetches the requested document from the other server, modifies the URLs within the document, and passes it on to the client.; Thus, subsequent requests from the client will automatically be directed through the gateway server. The method permits tracking individual web sessions and provides valuable information about user behavior. This information can be used for general purpose evaluation of web-based user interfaces to information systems. The technique can also be used to modify a browsing experience by layering or stripping hypertext content or functionality.
It is an object of the present invention to provide a decisive improvement regarding the above problems and thereby to raise substantially the available prior art.

This object is achieved by the method of claim 1.

The present invention provides a method, whereby the use of e. g. the foregoing (WO 01/05093) method can be significantly facilitated and made more reliable. The method enables the user in a presentation to employ normal browsing techniques (to follow hypertext links) in order to browse www-pages in such a way that the clients' browsers repeat the user's browsing activities concretely in real time. The method differs considerably from other currently employed remote control methods for computers, especially in the sense that it can be totally implemented solely by means of a basic www-browser mechanism and a server adhering to an HTTP-protocol. On the other hand, as pointed out above, other available remote control methods require support provided by separate software or browser extensions (appletts, script language programs, or the like) both for the user's system and usually also for the clients' systems. As a result, such methods are highly complicated in terms of technology and require special expertise in order to successfully organise presentations or conferences.

Regarding the use of a method of the present invention, the client will not be granting the user any authority over his/her own system that is not normally granted to the maker of some unfamiliar www-page, anyway. This is by virtue of the fact that, from the client's point of view, the method in technical terms is totally equivalent to his/her browsing the web for information presented by the user. Another result of this is that, if the client is capable of browsing through sets of www-pages, he/she shall also be a capable participant in a presentation performed by means of the method. In this respect as well, other methods currently available for a similar objective generally impose considerably more extensive technical requirements (allowing some protocol, Java operating authorization, etc. ) on the clients' interfaces.

A benefit provided by the method both for a user and for clients is evident e. g. in the following occasions:
- The user wishes to present his/her clients with some information not found in his/her previously prepared agendas. With the method, the user is able to find the information quickly in some set of www-pages and visualise it immediately for the clients.
- The user wishes to present his/her clients with an extensive amount of information, the choices made therefrom depending on the interests and reactions of clients.
- The user wishes to display some set of www-pages (e. g. a databank, archives, technical documentation).
- With the method, the user is able to browse through the set of pages in a normal manner and to describe subjects and data processing procedures by following hypertext links indicating connections.

Other preferred applications for a method of the invention are set forth in dependent claims directed thereto.

The invention will be described in detail in the following specification while making reference to the accompanying drawings, in which
Fig. 1 shows one general operating principle for a method for remote controlling a www-browser, and
Fig. 2 shows by way of an example the method of the invention as applied in the context of such pages whose accessibility or contents depend on parameters to be supplied, such as e. g. on the information of a questionnaire.

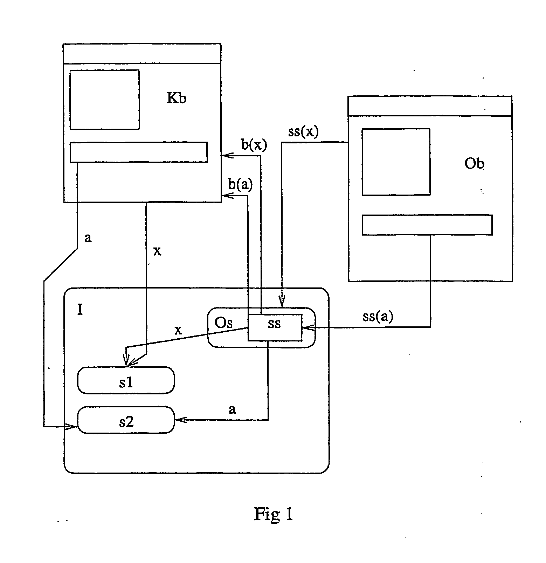

The invention relates to a method for remote controlling a www-browser, whereby a user is operating with an HTTP-server Os at his/her disposal by using his/her own www-browser Ob for browsing various sources accessible over the internet, intranet or a similar communications network for documents of his/her choice, such that one or more clients in communication with the server Os have their browsers Kb updated to display each document chosen by the user with his/her browser Ob to be displayed. When the document chosen to be displayed comprises a hypertext document, such as an html-page or the like, indicated particularly by a URL-address x, instead of an actual server response containing the discussed URL-address, the user's browser Ob is supplied with an output ss (x) from a separate script ss in communication with the user's server Os and operating as a filter, said output being a response externally equivalent to the desired hypertext document identified by the URL-address x given to the filter, script ss as a parameter, such that the following of a hypertext link included therein results in a request for the filter script ss with an address contained in the discussed hypertext link as its parameter. Thus, e. g., in reference to the general method operating principle shown in Fig. 1, an original link a is replaced in the filtered page with a link ss (a), as described above.

The filter script ss, functioning as described above, can be e. g. a normal CGI-type script on some conventional http-server, but there are also other options for its implementation. For example, if there are two web identifiers (domain names) allocated for an http-server, the server can be configured in such a way that, when it is referred to by one of the web identifiers, it will "imitate" some other server (functioning like a filter script described hereinafter), which is identified by supplying it with necessary information, for example by way of a cookie or some other parameter passing method. This is equivalent to the condition that the URL-address parameter to be given to the filter script is supplied directly as a URL, which appears to refer to a server identified by the other web identifier.

After the filter script ss has been supplied with a desired URL-address x as a parameter, a hypertext document indicated by the discussed address is first retrieved for processing, whereafter the filter script. ss is used to replace hypertext links a appearing in the document with links ss (a) which define a request for the filter script ss with the discussed hypertext link a given as an argument therefore, and/or relative references, such as URL-addresses, present in picture elements, cascading style sheets, and/or the like, are converted into absolute references.

The filter script ss (or a second script associated therewith) must naturally handle also the filtering of cascading style sheets in such a way that the URL-addresses (e. g. a URL-address for a background image) appearing therein are indeed absolute.

The filter script ss is used in the first place to process forms embedded in a desired hypertext document, such that the handler defined therein is replaced with a handler ss (x, p) supplied with information p of the form, and secondly the original information, such as the original handler, is embedded as hidden fields concealed in the filtered form.

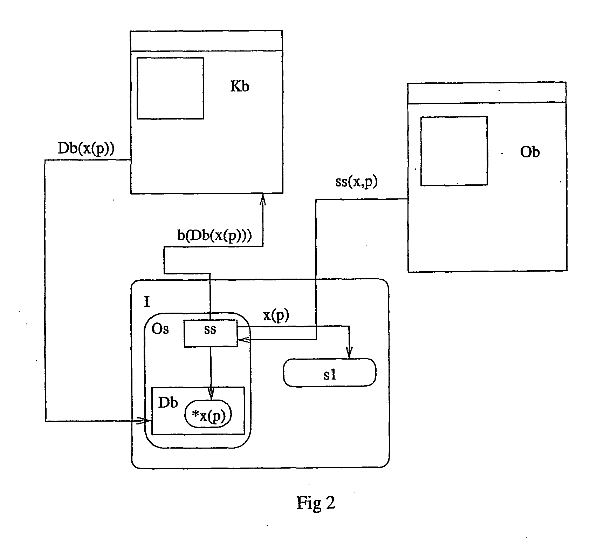

In a particular reference to the embodiment of the invention shown in Fig. 2, when the user chooses, e. g. by following a hypertext link, a given page to be displayed from the URL-address x, which depends on the parameters p, including input data for a form, cookies, user identification data or other such information defining the contents or accessibility of a document indicated by the above-discussed address x, this document shall be retrieved by the filter script ss from a given server sl, in which the x (p) -designated document is located, by supplying the filter script ss with p as a parameter thereof in connection with an http-request. This is followed by filtering this page for the user's browser Ob as shown in the example of Fig. 1, as well as separately also for clients to provide a document *x (p) which is stored in a database Db or other such system for the clients' browsers Kb by having all its relative addresses converted to absolute ones and documents containing other elements processed in a corresponding manner, e. g. as described in the following segments of this specification. At this point, the filter script ss additionally issues to the clients' browsers Kb a command b(Db(x(p))) to display the document *x(p) by retrieving it from the operator's server Os from the database Db by means of a normal http-protocol. In the operator's server Os, the subsequently required URL-addresses will be mapped by a given script or other similar application to pages stored in a database.

Hence, the documents *x(p) to be visualised for clients must be filtered in such a way that various sub-components - such as sub-documents embedded in a document by means of a frame-tag, cascading stylesheets, etc. - shall be retrieved from a database, in which they are stored, as soon as the user's browser, after receiving the filtered documents, commences to retrieve them by presenting requests to the screen script ss.

Moreover, the mode of operation shown in fig. 2 enables naturally the filter script ss to edit forms embedded in www-pages, such that the original handler x defined therein is replaced with a new handler ss(x, p), which is then supplied with information p of the form. The original information of the form, such as the original handler and e.g. the transmission method for the form's information, can be embedded in the filtered form as hidden fields causing no distraction to the user. Executed this way, the method can also be used as the user performs www-based database retrievals, searches using search engines, etc., the method making it possible for clients to monitor said functions subject to the user's approval. It is important that the client's/clients' browser Kb not be supplied with information given by the user to the discussed form, as such information may contain passwords, user identifications or other data naturally confidential and not to be disclosed to others.

Consequently, the method of fig. 2 also makes it possible for the user to browse through password-protected sets of pages, which are protected with identification protocols included in an http-protocol in such a way that the clients are able to monitor this, yet are unable to learn passwords, nor can themselves start browsing through possibly delicate or important material. This can be achieved in such a way that, when coming across a password-protected set of pages, the filter script ss transmits to the user's browser a page, in which this identification data is requested and which, as soon as the data is supplied, sends said data to the filter script ss which is now capable of retrieving the required page by supplying the server containing it with the identification data delivered thereto. Passwords for various security domains can be recorded in a database in such a way that, after supplying a given security domain once with the data, the user need not give it a second time.

The method of fig. 2 can also be used whenever the user browses sets of pages using cookies which generally contain e.g. login information or other such information, which is why the simplified operating patterns shown e.g. in fig. 1 are not sufficient for the reason that, because the clients' browsers Kb supply the servers with cookies other than those of the user's browser, the pages seen by the user and the clients are different from each other. In order to rectify this, the filter script ss stores, e.g. in a database Db, the cookies it has received from the servers and also sends the same along with requests as parameters p to the servers and stores the pages received in a filtered form for the clients, as described above, and instructs the clients' browsers to retrieve the pages stored in the database.

Cookies may be also be used in scripts embedded in a page. The scripts are filtered e.g. in such a way that all references to various objects containing browser information will be replaced with references to an object, which is created by a script embedded in the page by the filter script ss. Such objects only include information that is allowable for a script coming from a given server. Such information includes the very cookies which have arrived from this particular server.

Another preferred application of the method is to organise e.g. various meetings or interactive presentations in such a fashion that the clients' browsers Kb also operate, whenever necessary and in a limited manner, the same way as the user's browser Ob, and the user's browser Ob functions the same way as the clients' browsers Kb in the sense that it is always updated to display the view of relevant operating browsers.

In a further preferred application of the method, combined with the above-described implementation, it is possible for several persons to e.g. edit and update sets of www-pages in collaboration, such that the filtered pages to be produced for the user's browser are by means of JavaScript and/or other tools provided with a capability of changing the contents of a page in such a way that the changes will be updated for viewing by clients and other users.

In yet another preferred application, the user's interface can be used for disabling the linkage of one or more clients' browser Kb to the user's browser Ob, particularly to make sure that the view on each client's www-browser is in all cases only supplied with controlled documentation instead of e.g. www-pages which have become outdated or irrelevant regarding the contents thereof.

As a further preferred feature, the user's interface provides a possibility for the user to keep open a larger number of browsing windows in the process of browsing documents and to swich from window to window in such a way that the client is always provided with a view of the page which the user has in the active window at that time.

Thus, a foundation of the method is that the user's browsing activities are "rerouted" through an HTTP-server containing pages and scripts required by him/her. By virtue of this, the user's browsing activities can also be readily conveyed to a client's browser, e.g. as described in the above-cited method (WO 01/05093). It is also possible to employ the present invention in combination with any method capable of sending instructions from a user's server to clients' browsers.

On the other hand, a practical application of the method requires utmost care not to give a chance to a so-called cross site scripting attacks. Such an attack refers for example to a situation, in which a given page has embedded therein some malicious JavaScript code which issues commands to a server. Normally, a script is only able to communicate with that server which has delivered the page it is embedded in, and therefore it is impossible for the script to launch an attack against other servers or to exploit information received from elsewhere. However, if a script resides on a page produced by means of the filter script ss, it has a right, as far as the browser is concerned, to communicate with the filter-script containing server which may have located therein information regarding user interfaces prepared for easier use of the method and possibly passwords. Poorly executed, the method might facilitate malicious actions, e.g. deletion of files, destruction of prepared presentations, etc.

In this context, however, it is possible with a minor static analysis to disable a certain set of potentially hostile actions performed by scripts. This cannot be done in general extent, but when certain constructions used by scripts are simply filtered out, it is possible to ensure that the remaining code is acceptable. The remaining subset is sufficient for generally employed purposes. Commonly employed properties include e.g.:
- opening of new browsing windows,
- execution of minor graphic details, e.g. image is changed by placing a mouse on top of it, and
- automated checking of form information.

Excluded properties include generally e.g.:
- execution of arbitrary code (eval, etc.). This can also be done by replacing eval-function calls with eval'-function calls, wherein the eval'-function applies the presently described principles to examine a code assigned thereto and thus proceeds to process a safe code only,
- sending of arbitrary HTTP-requests to a source server, and
- functions referring to script variables of a window that has opened the script-containing window.

It is obvious that the invention is not limited to the applications illustrated or described above, but can be varied within the basic inventive concept as required by any given practical applications and demands. Hence, particularly in view of increasing usability of the method, e.g. the following expansions are also feasible
- Server has a capability of recording the user's browsing activities to give him/her a chance, if desirable at some later occasion, to reproduce them directly for some other client.
- The script language transaction handler of a JavaScript (or the like) browser can be used for conveying also other browsing activities than just following hypertext links to be displayed by the browser. For example, it is possible at certain intervals to change the position of a mouse indicator or to display the input procedures of text imput fields.

## Claims

1. A method for remote controlling a www-browser, whereby a user is operating an HTTP-server (Os) at his/her disposal by using his/her own www-browser (Ob) for browsing various sources accessible over the Internet, intranet or similar communications network for documents of his/her choice, such that one or more clients in communication with the server (Os) have their browsers (Kb) updated to display each document chosen in various ways by the user with his/her browser (Ob) to be displayed, whereby the method is operative without installing extensions to the user's or client's browser using solely the HTTP-protocol to control one or more clients' browsers, such that the client/clients browsers in communication with the server (Os) receive a command from a filter script to display each document chosen by the user with his/her browser (Ob), so that, when the document chosen to be displayed comprises a hypertext document, such as an html-page or the like, indicated particularly by a URL-address (x), instead of an actual server response containing the discussed URL-address, the users browser (Ob) is supplied with an output (ss(x)) or a handler (ss(x, p)) from separate filter script (ss) in communication with the user' s server (Os), invoked by referring to the user's server by a specially allocated domain name, operating as a filter,
**characterized in that,**
after the filter script (ss) has been supplied with a desired URL-address (x) as a parameter, a hyper text document indicated by the discussed address is first retrieved for processing, whereafter the filter script (ss) is used to replace hypertext links (a) appearing in the document with links (ss (a)) which define a request for the filter script (ss) with the discussed hypertext link (a) allocated as an argument therefore, and/or relative references, such as URL-addresses, present in picture elements, cascading style sheets, and/or the like, are converted into absolute references, thus resulting the user in a presentation to employ normal browsing techniques by following hypertext links in order to browse www pages in such a way that the client' s browsers repeat the user's browsing activities concretely in real time, and that
when a document (x(b)) depends on a given parameter (p), such as a cookie, user identification data, values of hidden fields on a form, and/or the like, the filter script (ss) is used to retrieve the original document from a server (s1) containing it by giving it the discussed parameter (p) as a parameter for an http-request retrieving the discussed document (x(p)) and by storing this document, after screening (*x(p)) it for clients to make it externally equivalent to the original document, in a database (Db) or the like, the browser (Kb) of one or more clients being directed to display it therefrom.

2. A method as set forth in claim 1,
**characterized in that**
the filter script (ss) is used in the first place to process forms embedded in a desired hypertext document, such that the handler defined therein is replaced with a handler (ss(x, p)) supplied with information (p) of the form, and secondly the original information, such as the original handler, is embedded as hidden fields concealed in the screened form.

3. A method as set forth in claim 1,
**characterized in that**,
the scripts are filtered so that all references to various objects containing browser information will be replaced with references to an object, which is created by a script embedded in the page by the action of a filter script (ss), said objects only including information that is allowable for a script coming from a given server, such as cookies.

4. A method as set forth in any of the preceding claims 1 to 3,
**characterized in that**
the user interface is used to enable disconnecting the linkage of one or more clients' browser (Kb) to the user's browser (Ob), especially for making sure that the display of each client's www-browser is in all instances only supplied with controlled documentation.

5. A method as set forth in any of the preceding claims 1 to 4,
**characterized in that**
the user interface is used to enable the user to keep open a plurality of browsing windows in the process of browsing documentation and to move from window to window in such a way that each client is always provided with a view of the page which the user has in an active window at that time.

6. A method as set forth in any of the preceding claims 1 to 5,
**characterized in that**
the scripts present in hypertext documents to be browsed are filtered in such a way that all references to various objects containing information of a www-browser are replaced with references to an object, which is created by a script embedded in a processed page by the filter script (ss).

7. A method as set forth in claim 6,
**characterized in that**
the scripts embedded in www-pages subject to browsing are allowed to have e.g. the following capabilities of:
- opening new browsing windows,
- executing minor graphic details, such as replacing a picture with another upon placing the mouse on top of
it, and
- automatically checking information presented in forms.

8. A method as set forth in claim 6 or 7,
**characterized in that**
the scripts embedded in www-pages subject to browsing are disallowed to have e. g. the following capabilities of:
- executing an arbitrary code (eval, etc.),
- sending arbitrary HTTP-requests to a source server, and
- functions relating to the script variables of a window that has opened the script-containing window.

9. A method as set forth in any of the preceding claims 1 to 8,
**characterized in that**
operation of the user interface involved in utilization of the method enables one or more clients to serve as an active operator supplying documents to other participants.

## Patentansprüche

1. Verfahren zur Fernsteuerung eines Webbrowsers, bei dem ein Benutzer einen ihm zur Verfügung stehenden HTTP-Server (Os) betreibt, indem er seinen eigenen Webbrowser (Ob) zum Durchsuchen von diversen über Internet, Intranet oder ähnliche Kommunikationsnetze zugänglichen Quellen nach Dokumenten seiner Wahl verwendet, um bei einem oder mehreren mit dem Server (Os) kommunizierenden Clients deren Browser (Kb) derart zu aktualisieren, dass jedes vom Benutzer auf verschiedenartige Weise mit seinem Browser (Ob) zur Anzeige ausgewählte Dokument angezeigt wird, wobei das Verfahren ohne Installation von Erweiterungen am Browser des Benutzers oder Clients unter ausschließlicher Verwendung des HTTP-Protokolls zur Steuerung von Browsern eines oder mehrerer Clients derart funktionsfähig ist, dass die mit dem Server (Os) kommunizierenden Browser des bzw. der Clients einen Befehl aus einem Filterscript zur Anzeige jedes vom Benutzer mit seinem Browser (Ob) ausgewählten Dokuments empfangen, sodass, wenn das zur Anzeige ausgewählte Dokument ein Hypertext-Dokument umfasst, beispielsweise eine HTML-Seite oder dergleichen, welche insbesondere mit einer URL-Adresse (x) anstelle einer wirklichen Server-Antwort mit darin enthaltener besagter URL-Adresse angegeben ist, an den Browser (Ob) des Benutzers eine Ausgabe (ss(x)) oder ein Handler (ss(x, p)) aus einem separaten Filterscript (ss) übermittelt wird, welches mit dem Server (Os) des Benutzers kommuniziert und durch Verweis auf den Server des Benutzers mit einem speziell zugewiesenen Domain-Namen aufgerufen wird, wobei dieser als Filter fungiert, **dadurch gekennzeichnet, dass**, nachdem dem Filterscript (ss) eine gewünschte URL-Adresse (x) als Parameter übermittelt wurde, ein mit der besagten Adresse angegebenes Hypertext-Dokument zunächst zur Verarbeitung abgerufen wird, woraufhin das Filterscript (ss) dazu verwendet wird, im Dokument erscheinende Hypertext-Links (a) durch Links (ss(a)) zu ersetzen, die eine Anforderung des Filterscripts (ss) definieren, wobei der besagte Hypertext-Link (a) als Argument dafür zugeordnet ist, und/oder relative Verweise, beispielsweise URL-Adressen, wie sie in Bildelementen, sogenannten Cascading Style Sheets und/oder dergleichen enthalten sind, zu absoluten Verweisen umgewandelt werden, mit dem Ergebnis, dass der Benutzer in einer Präsentation normale Durchsuch-Techniken verwenden kann, indem er zum Durchsuchen von Internetseiten Hypertext-Links auf eine Weise folgt, dass die Browser des Clients die Durchsuchaktivitäten des Benutzers konkret in Echtzeit wiederholen, und
dass bei Abhängigkeit eines Dokuments (x(b)) von einem gegebenen Parameter (p) (beispielsweise einem Cookie, Benutzeridentifikationsdaten, Werten versteckter Felder in einem Formular, und/oder dergleichen) das Filterscript (ss) dazu verwendet wird, das ursprüngliche Dokument von einem Server (s1), auf dem es sich befindet, herunter zu laden, indem es ihm den besagten Parameter (p) als Parameter für eine HTTP-Anforderung zum Herunterladen des besagten Dokuments (x(p)) zuweist und dieses Dokument in einer Datenbank (Db) oder dergleichen speichert, nachdem es für Clients durchsucht (*x(p)) wurde, um es extern äquivalent zum ursprünglichen Dokument zu machen, wobei der Browser (Kb) eines oder mehrerer Clients derart geführt wird, dass es von dort angezeigt wird.

2. Verfahren nach Anspruch 1, **dadurch gekennzeichnet, dass** das Filterscript (ss) zunächst zur Verarbeitung von in einem gewünschten Hypertext-Dokument eingefügten Formularen derart verwendet wird, dass der darin definierte Handler durch einen Handler (ss(x, p) ersetzt wird, an den die Information (p) aus dem Formular übergeben wird, und zweitens dann die ursprüngliche Information, beispielsweise der ursprüngliche Handler, als versteckte Felder, die in dem überprüften Formular verborgen sind, eingefügt wird.

3. Verfahren nach Anspruch 1, **dadurch gekennzeichnet, dass** die Scripts gefiltert werden, sodass alle Verweise auf diverse Objekte, die Browserinformation enthalten, durch Verweise auf ein Objekt ersetzt werden, das durch ein unter Wirkung eines Filterscripts (ss) in der Seite eingefügtes Filterscript erzeugt wird, wobei diese Objekte ausschließlich Information enthalten, die für ein von einem bestimmten Server stammendes Script zulässig ist, beispielsweise Cookies.

4. Verfahren nach einem der voran stehenden Ansprüche 1 bis 3, **dadurch gekennzeichnet, dass** die Benutzerschnittstelle dazu verwendet wird, ein Lösen der Verbindung des Browsers (Kb) eines oder mehrerer Clients mit dem Browser (Ob) des Benutzers zu ermöglichen, insbesondere um sicherzustellen, dass an die Anzeige des Webbrowsers jeden Clients unter allen Umständen nur kontrollierte Dokumente übermittelt werden.

5. Verfahren nach einem der voran stehenden Ansprüche 1 bis 4, **dadurch gekennzeichnet, dass** die Benutzerschnittstelle dazu verwendet wird, es dem Benutzer zu ermöglichen, beim Durchsuchen von Dokumenten mehrere Browserfenster offen zu lassen und sich derart von Fenster zu Fenster zu bewegen, dass jeder Client immer eine Ansicht der Seite empfängt, die sich zu diesem Zeitpunkt beim Benutzer in einem aktiven Fenster befindet.

6. Verfahren nach einem der voran stehenden Ansprüche 1 bis 5, **dadurch gekennzeichnet, dass** die in den zu durchsuchenden Hypertext-Dokumenten vorhandenen Scripts derart gefiltert werden, dass alle Verweise auf diverse Objekte, die Information eines Webbrowsers enthalten, durch Verweise auf ein Objekt ersetzt werden, das durch ein vom Filterscript (ss) in einer verarbeiteten Seite eingefügtes Script erzeugt wird.

7. Verfahren nach Anspruch 6, **dadurch gekennzeichnet, dass** die in den zu durchsuchenden Internetseiten eingefügten Scripts beispielsweise die folgenden Fähigkeiten haben dürfen:
Öffnen neuer Browserfenster,
Ausführen kleinerer graphischer Details, zum Beispiel Ersetzen eines Bildes gegen ein anderes, nachdem der Mauszeiger darauf gesetzt wurde, und
automatisches Überprüfen von in Formularen enthaltener Information.

8. Verfahren nach Anspruch 6 oder 7, **dadurch gekennzeichnet, dass** die in zu durchsuchenden Internetseiten eingefügten Scripts beispielsweise nicht die folgenden Fähigkeiten haben dürfen:
Ausführen eines willkürlichen Codes (eval, etc.)
Senden beliebiger HTTP-Anforderungen an einen Quellenserver, und
Funktionen, die sich auf die Scriptvariablen eines Fensters beziehen, mit dem das das Script enthaltende Fenster geöffnet wurde.

9. Verfahren nach einem der voran stehenden Ansprüche 1 bis 8, **dadurch gekennzeichnet, dass** der Betrieb der Benutzerschnittstelle, die beim Einsatz des Verfahrens involviert ist, ermöglicht, dass einer oder mehrere Clients als aktiver Operator fungiert bzw. fungieren, der Dokumente an andere Teilnehmer übermittelt.

## Revendications

1. Procédé de commande à distance d'un navigateur web, par lequel un utilisateur actionne un serveur HTTP (Os) à sa disposition en utilisant son propre navigateur web (Ob) pour la navigation de différentes sources accessibles sur l'Internet, Intranet ou réseau de communications similaire pour documents à son choix, de sorte que l'un ou plusieurs clients en communication avec le serveur (Os) aient leur navigateurs (Kb) mis à jour pour afficher chaque document choisi en diverses manières par l'utilisateur avec son navigateur (Ob) pour être affiché, par lequel le procédé est opérationnel sans l'installation d'extensions au navigateur de l'utilisateur ou du client en utilisant seulement le protocole -HTTP pour commander l'un ou plusieurs navigateurs des clients, de sorte que les navigateurs du (des) client(s) en communication avec le serveur (Os) reçoivent une commande d'un script de filtre pour afficher chaque document choisi par l'utilisateur avec son navigateur (Ob), de sorte qu'alors quand le document choisi pour être affiché comprend un document de hypertexte, comme une page html ou autre chose pareille, indiquée particulièrement par une adresse - URL (X), au lieu d'une réponse de serveur actuel contenant l'adresse URL discutée, le navigateur de l'utilisateur (Ob) est alimenté avec une sortie (ss(x)) ou un programme de traitement (ss(x, p)) à partir d'un script de filtre séparé (ss) en communication avec le serveur de l'utilisateur (Os), invoqué en référant le serveur de l'utilisateur par un nom de domaine spécialement affecté, opérant comme un filtre,
**caractérisé en ce que**,
- après que le script de filtre (ss) ait été alimenté avec une adresse URL (X) désirée comme un paramètre, un document hypertexte indiqué par l'adresse discutée est d'abord récupéré pour traitement, après quoi le script de filtre (ss) est utilisé pour remplacer les liens de hypertexte (a) apparaîtrant dans le document avec les liens (ss(a)) qui définissent une demande pour le script de filtre (ss) avec le lien de hypertexte discuté (a) affecté donc comme un argument, et/ou de références relatives, comme les adresses URL, présentent dans les éléments d'images, les feuilles en style cascade, et/ou autres choses pareilles, sont transformées en références absolues, ainsi en résultant l'utilisateur dans une présentation pour utiliser les techniques de navigation normales en suivant les liens de hypertexte pour navigation des pages web de telle manière que les navigateurs du client répètent les activités de navigation de l'utilisateur concrètement en temps réel , et que
- alors quand un document (x(b)) dépend d'un paramètre donné (p), comme une cookie, de données d'identification d'utilisateur, de valeurs de champs cachés sur un formulaire, et/ou d'autres choses pareilles, le script de filtre(ss) est utilisé pour retrouver le document original d'un serveur (s1) le contenant en donnant à celui le paramètre discuté (p) comme un paramètre pour une récupération de demande http du document discuté (x(p)) et le stockage de ce document, après la présentation sur l'écran (*x(p)) de celui pour les clients pour le faire équivalent à l'extérieur au document original, dans une base de données (Db) ou autre chose pareille, le navigateur (kb) d'un ou plusieurs clients étant dirigé pour l'afficher de là.

2. Un procédé selon la revendication 1, **caractérisé en ce que,** le script de filtre (ss) est utilisé dans la première place pour traiter les formulaires englobés dans un document de hypertexte désiré, de sorte que le programme de traitement défini ici est remplacé avec un programme de traitement (ss(x, p)) fourni avec l'information (p) du formulaire, et secondement l'information originale, comme le programme de traitement original, est englobé comme des champs cachés masqués dans le formulaire présenté sur l'écran.

3. Un procédé selon la revendication 1, **caractérisé en ce que,** les scripts sont filtrés de sorte que toutes les références aux différents objets contenant l'information de navigateur seront remplacées avec références à un objet, qui est créé par un script englobé dans la page par l'action d'un script de filtre (ss), lesdits objets incluant seulement l'information qui est permise pour un script venant d'un serveur donné, comme les cookies.

4. Un procédé selon l'une quelconque des revendications antérieures 1 à 3, **caractérisé en ce que**, l'interface d'utilisateur est utilisée pour permettre la déconnecte du lien de l'un ou plusieurs navigateurs du client (Kb) au navigateur de l'utilisateur (Ob), spécialement pour être sûr que l'affichage de chaque navigateur web du client est dans tous les moments alimenté seulement avec la documentation commandée.

5. Un procédé selon l'une quelconque des revendications antérieures 1 à 4, **caractérisé en ce que**, l'interface d'utilisateur est utilisée pour permettre à l'utilisateur de tenir ouvertes une pluralité de fenêtres de navigateur dans le procédé de navigation de la documentation et le mouvement de fenêtre à fenêtre de telle manière que chaque client soit toujours pourvu avec une vue de la page que l'utilisateur l'ait dans une fenêtre active à ce temps-là.

6. Un procédé selon l'une quelconque des revendications antérieures 1 à 5, **caractérisé en ce que**, les scripts présents dans les documents hypertexte pour être navigués sont filtrés de telle manière que toutes les références aux différents objets contenant l'information d'un navigateur web sont remplacés avec les références à un objet, qui est créé par un script englobé dans une page traitée par le script de filtre (ss).

7. Un procédé selon la revendication 6, **caractérisé en ce que**, les scripts englobés dans le sujet pages web pour navigation sont permis pour avoir par ex. les suivantes capacités d':
- ouvrir de nouvelles fenêtres de navigation,
- exécuter de détails graphiques mineurs, comme remplacer une image avec autre en plaçant le souris sur le dessus de celui, et
- vérifier automatiquement l'information présentée dans les formulaires.

8. Un procédé selon la revendication 6 ou 7, **caractérisé en ce que**, les scripts englobés dans le sujet pages web pour navigation ne sont pas permis pour avoir par ex. les suivantes capacités d':
- exécuter un code arbitraire (eval, etc.)
- envoyer les demandes http arbitraires à un serveur source, et
- des fonctions relatives aux variables de script d'une fenêtre qui a ouvert la fenêtre contenant le script.

9. Un procédé selon l'une quelconque des revendications antérieures 1 à 8, **caractérisé en ce que**, le fonctionnement de l'interface d'utilisateur impliquée dans l'utilisation du procédé permet à l'un ou plusieurs clients de servir comme un opérateur actif fournissant les documents aux autres participants.
